(19) Europäisches Patentamt
European Patent Office
Office européen des brevets

(11) **EP 2 179 775 B1**

(12) **EUROPEAN PATENT SPECIFICATION**

(45) Date of publication and mention
of the grant of the patent:
**29.07.2020 Bulletin 2020/31**

(51) Int Cl.:
***B01D 46/24*** *(2006.01)*  ***F01N 3/022*** *(2006.01)*
***B01D 46/00*** *(2006.01)*

(21) Application number: **09252434.7**

(22) Date of filing: **16.10.2009**

(54) **Plugged honeycomb structure and method for manufacturing the same**

Abgedichtete Wabenstruktur und Herstellungsverfahren dafür

Structure en nid d'abeille raccordée et son procédé de fabrication

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **27.10.2008 JP 2008275453**

(43) Date of publication of application:
**28.04.2010 Bulletin 2010/17**

(73) Proprietor: **NGK Insulators, Ltd.**
**Nagoya City, Aichi Pref., 467-8530 (JP)**

(72) Inventors:
• **Matsumoto,Tasuku**
**Nagoya City, Aichi-ken 467-8530 (JP)**

• **Mizutani, Takashi**
**Nagoya City, Aichi-ken 467-8530 (JP)**
• **Hirose, Ginichiro**
**Nagoya City, Aichi-ken 467-8530 (JP)**

(74) Representative: **Mewburn Ellis LLP**
**Aurora Building**
**Counterslip**
**Bristol BS1 6BX (GB)**

(56) References cited:
DE-A1-102006 039 571    DE-A1-102007 042 821
JP-A- 9 206 526    JP-U- S5 993 717

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Background of the Invention and Related Art Statement

The present invention relates to a honeycomb structure and a method for manufacturing the honeycomb structure. More specifically, the present invention relates to a plugged honeycomb structure having a cutout portion and a method for manufacturing the plugged honeycomb structure.

There has conventionally been used a ceramic honeycomb structure for a catalyst carrier using a catalytic function for an internal combustion engine, a boiler, a chemical reactor, a fuel cell reformer, or the like; a filter for trapping particulate matter in exhaust gas, in particular, a trapping filter for diesel particulate matter (diesel particulate filter: hereinbelow sometimes referred to as a "DPF"); or the like.

The honeycomb structure used for such a purpose generally has a plurality of cells separated by porous partition walls and functioning as fluid passages. In particular, when the honeycomb structure is used as a particulate-trapping filter, the honeycomb structure has a structure where each of adjacent cells is plugged in the mutually opposite side end portion so that each end face of the honeycomb structure shows a checkerwise pattern. In a honeycomb structure having such a structure, a fluid to be treated flows into the cells which are not plugged in the inflow hole side end face and are plugged in the outflow hole side end face, passes through the porous partition walls, and is discharged from the adjacent cells, that is, the cells which are plugged in the inflow hole side end face and are not plugged in the outflow hole end face. At this time, the partition walls function as a filter. For example, in the case that the structure is used as a DPF, particulate matter (hereinbelow sometimes referred to as "PM") such as soot discharged from the diesel engine is trapped by the partition walls and deposits on the partition walls.

In a diesel engine, such a honeycomb structure as described above is generally disposed in an exhaust gas flow passage on the downstream side of the engine as a DPF and has a function of passing and purifying the exhaust gas disposed from the engine. At this time, a peeled substance such as rust on an inner wall of a fluid passage, welding waste, a solid such as a garbage entered in a flow passage upon attachment, or liquid such as condensate water collides with the inner walls of the flow passages of the honeycomb structure disposed in the flow passage at high speed together with the exhaust gas to damage them. In particular, since a solid foreign substance bounces on the inflow hole side end face of the DPF by engine vibrations, a plugging portion or the like of DPF is hollowed, which may deteriorate trapping efficiency. The function is generally called erosion and a serious problem from the viewpoint of maintaining long-term durability of the fluid passage and honeycomb structure .

To solve the erosion problem, a measure has conventionally been tried to inhibit a foreign substance from directly colliding at high speed by arranging a wire mesh or a shield plate in the flow passage of the upstream side of the honeycomb structure which may be damaged. However, the solid and liquid foreign substances can not be removed sufficiently, and the long-term durability can not be secured yet. That is, by the foreign substances incoming from the upstream side of the exhaust gas flow, damages on a surface of an inner wall of the flow passage or on the honeycomb structure are sometimes caused. Therefore, a measure is required for securely removing foreign substance in the flow passage and strengthening durability of the purification apparatus. For example, JP-A-9-206526 discloses a flow passage where an exhaust gas flow-shifting means and a foreign substance trapping portion are arranged in the flow passage on the upstream side of the honeycomb structure.

The gas flow passage disclosed in JP-A-9-206526 physically traps foreign substances in exhaust gas in a pocket-shaped foreign substance-trapping portion disposed on the inner wall of the fluid passage and having an open portion facing toward the upstream direction of exhaust gas with shifting the flow of the exhaust gas toward the outer peripheral direction of the flow passage by the exhaust gas flow-shifting means and exhibits an effect against the erosion problem caused by bouncing of the foreign substance in the fluid passage. However, since the exhaust gas flow passage needs to be long in the flow direction to cause a problem of increasing the size of the exhaust gas purification apparatus. In addition, when a pocket is arranged without changing the flow passage diameter, the flow passage cross section is reduced to increase pressure loss, which may cause decrease in engine output. When a pocket is arranged with increasing the flow passage diameter, because the flow passage cross section is increased, vehicle height has to be increased in order to secure the minimum ground height upon arranging the apparatus on the underside of the vehicle floor. When the fact that there is a limitation on the space for mounting on the vehicle is considered, it is desirable that the exhaust gas purification apparatus is designed to be as small as possible, and the flow passage disclosed in JP-A-9-206526 is not sufficient from that viewpoint.

Documents JPS5993717U and DE102006039571 disclose other plugged honeycomb structures.

Summary of the Invention

The present invention has been made in view of such problems of prior art and aims to provide a plugged honeycomb structure used in an exhaust gas purification apparatus having both an erosion inhibition effect and downsizing, capable of inhibiting purification performance and strength from deteriorating due to shape processing, and being excellent in raw material yield and costs.

As the inventors' earnest investigation, they hit upon the idea of making the plugged honeycomb structure have a structure having a cutout portion in a part of a fluid passage end portion and having plugging portions also in an end portion of each of the predetermined cells constituting the cutout portion in a plugged honeycomb structure having a structure where each of adjacent cells is plugged in one end portion on the mutually opposite side to make the cutout portion effectively work for inhibition of erosion and to realize space saving by the volume of the cutout portion. Further, the present inventors earnestly investigated various problems such as strength deterioration, regeneration limit deterioration, and pressure loss increase and hit upon the idea that the problems can be solved by specifying the thickness and the shape of the bonding material layer to predetermined ones in a plugged honeycomb structure obtained by integrally bonding a plurality of honeycomb segments by means of a bonding material layer, which led to the completion of the present invention. That is, according to the present invention, there are provided a plugged honeycomb structure having sufficient purification performance and strength and having a desired end face shape and a manufacturing method for the structure, that is, the plugged honeycomb structure and a manufacturing method for the structure, according to claims 1 and 6.

In a plugged honeycomb structure of the present invention, it is possible to form a desired cutout portion in a fluid inflow hole side end portion to obtain a plugged honeycomb structure having an end portion shape in accordance with the purpose. In addition, according to a method for manufacturing a plugged honeycomb structure of the present invention, there can be improved problems such as damages and deterioration in strength upon manufacturing and regeneration limit deterioration and pressure loss increase upon use.

Brief Description of the Drawings

[Fig. 1] Fig. 1 is a perspective view schematically showing an embodiment of a conventional plugged honeycomb structure.

[Fig. 2] Fig. 2 is a perspective view schematically showing another embodiment of a conventional plugged honeycomb structure.

[Fig. 3] Fig. 3 is a perspective view schematically showing an embodiment of a plugged honeycomb structure of the present invention.

[Fig. 4] Fig. 4 is a perspective view schematically showing another embodiment of a plugged honeycomb structure of the present invention.

[Fig. 5A] Fig. 5A is a cross-sectional view schematically showing an embodiment of an exhaust gas purification apparatus equipped with a plugged honeycomb structure of the present invention.

[Fig. 5B] Fig. 5B is a cross-sectional view schematically showing another embodiment of an exhaust gas purification apparatus equipped with a plugged honeycomb structure of the present invention.

[Fig. 5C] Fig. 5C is a cross-sectional view schematically showing still another embodiment of an exhaust gas purification apparatus equipped with a plugged honeycomb structure of the present invention.

[Fig. 6] Fig. 6 is a cross-sectional view schematically showing a scene where exhaust gas flows into an embodiment of a plugged honeycomb structure of the present invention.

[Fig. 7] Fig. 7 is a cross-sectional view schematically showing a scene where exhaust gas flows into another embodiment of a plugged honeycomb structure of the present invention.

[Fig. 8] Fig. 8 is a process drawing schematically showing a step where a depression is formed on a side face of a honeycomb segment.

[Fig. 9] Fig. 9 is a process drawing schematically showing a step where an arc shaped curve is formed over a whole honeycomb segment.

[Fig. 10] Fig. 10 is a cross-sectional view schematically showing a state that a short segment is obliquely bonded with respect to a long segment using a bonding material spacer.

[Fig. 11] Fig. 11 is a partial cross-sectional view in an axial direction schematically showing a plugged honeycomb structure before cutting the long plugging portions formation side end portion.

[Fig. 12] Fig. 12 is a partial cross-sectional view in an axial direction schematically showing a plugged honeycomb structure not according to the invention, after cutting the long plugging portions formation side end portion.

[Fig. 13] Fig. 13 is a schematic front view of an embodiment of a plugged honeycomb structure Z not according to the present invention viewed from a cutout portion formation direction.

[Fig. 14] Fig. 14 is a schematic front view of another embodiment of a plugged honeycomb structure not according to the present invention viewed from a cutout portion formation direction.

[Fig. 15] Fig. 15 is a process drawing schematically showing a step of piling up honeycomb segments.
[Fig. 16] Fig. 16 is a perspective view schematically showing one embodiment of a honeycomb segment layered body.

1: honeycomb segment, 1a: short segment, 1b: long segment, 2: cutout portion, 3: bonding material layer, 5: cell, 6: partition wall, 8: DPF, 9: honeycomb catalyst body, 10, 10a, 10b, 20, 20a, 20b: plugged honeycomb structure, 11: inflow hole side end face, 12: outflow hole side end face, 13: foreign substance-trapping pocket, 14: corner portion of cutout portion, 15: container, 16: depression, 17: pressing means, 18: curve-forming embossing means, 19: bonding material spacer, 21: depressed segment, 22: arc-shaped segment, 23: oblique segment, 24: long plugging portion, 25: plugging portion, 26: end mill, 30: honeycomb segment layered body, 110, 120, and 130: exhaust gas purification apparatus

Detailed Description of the Invention

Hereinbelow, an embodiment of the present invention will be described with referring to drawings.

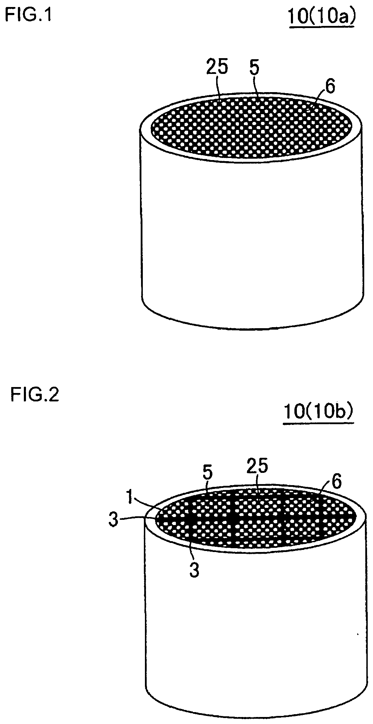

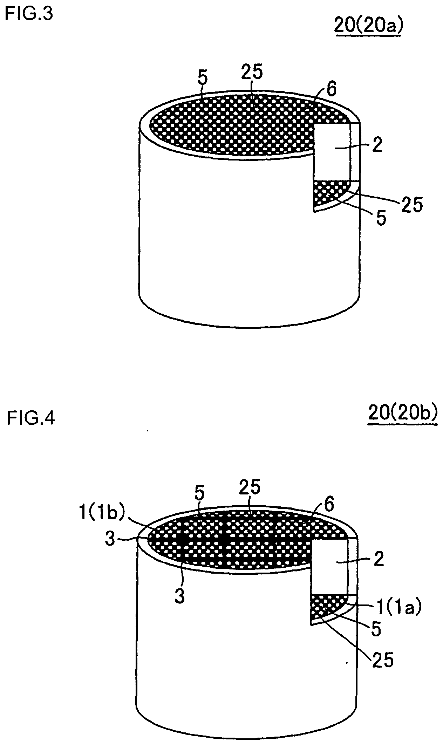

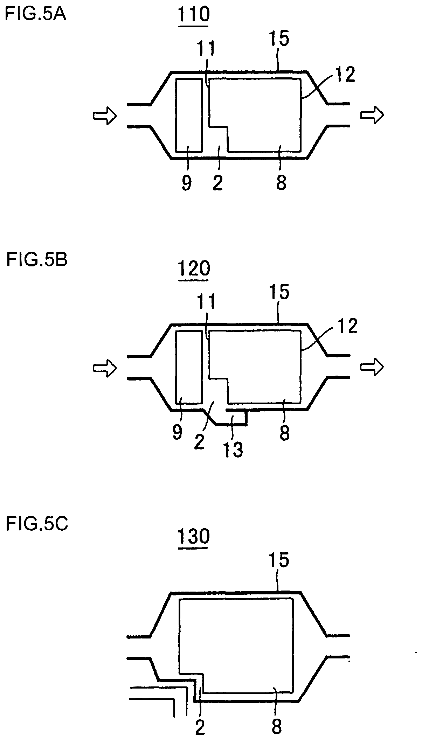

Figs. 1 and 2 are perspective views each schematically showing an embodiment of a conventional plugged honeycomb structure. Figs. 3 and 4 are perspective views each schematically showing an embodiment of a plugged honeycomb structure of the present invention. In addition, Figs. 5A to 5C are cross-sectional views each schematically showing an embodiment of an exhaust gas purification apparatus equipped with a plugged honeycomb structure of the present invention. Incidentally, in Figs. 5A and 5B, the observers' left side of the figures is the exhaust gas inflow hole side, and the observers' right side of the figures is the exhaust gas outflow hole side.
As a conventional plugged honeycomb structure used as a DPF in an exhaust gas purification apparatus, for example, as shown in Fig. 1, there is a plugged honeycomb structure 10a integrally formed into a desired shape in advance, having a plurality of cells 5 separated by porous partition walls 6 and functioning as fluid passages, and plugged in such a manner that each of adjacent cells 5 is plugged in a passage end portion on the mutually opposite side to form plugging portions 25. In addition, as shown in Fig. 2, there is a cylindrical plugged honeycomb structure 10 having no unevenness in the end portion in the axial direction as the plugged honeycomb structure 10b having honeycomb segments 1 each having a plurality of cells 5 separated by porous partition walls 6 and functioning as fluid passages and being integrally bonded together by means of the bonding material layer 3 to be formed into a desired shape, followed by plugging of the cells 5 in such a manner that each of adjacent cells 5 is plugged in a passage end portion on the mutually opposite side to form plugging portions 25.
On the other hand, a plugged honeycomb structure of the present invention is, as shown in Figs. 3 and 4, a plugged honeycomb structure 20 to serve as a diesel particulate filter having a plurality of cells 5 separated by porous partition walls 6 and functioning as fluid passages, the cells 5 each being plugged on one end portion in such a manner that each of adjacent cells 5 is plugged on the mutually opposite side to form plugging portions 25, the honeycomb structure having a cutout portion 2 in a part of a fluid inflow end portion, and predetermined cells 5 constituting the cutout portion 2 each being plugged in one end portion in such a manner that each of adjacent cells 5 is plugged on the mutually opposite side.
As a plugged honeycomb structure 20 of the present invention, for example, as shown in Fig. 3, there is a unitary type plugged honeycomb structure 20a formed into a desired shape in advance and having plugging portions 25 formed in such a manner that each of adjacent cells 5 is plugged on one end portion on the mutually opposite side, where the structure has a cutout portion 2 in a part of the fluid inflow end portion, and each of the predetermined cells 5 constituting the cutout portion 2 is also plugged in one end portion in such a manner that each of adjacent cells 5 is plugged on the mutually opposite side. In addition, as shown in Fig. 4, there is a bonded type plugged honeycomb structure 20b obtained by integrally bonding a plurality of honeycomb segments 1 (1a, 1b) each having a plurality of cells 5 separated by porous partition walls 6 and functioning as fluid passages and having plugging portions 25 formed in such a manner that each of adjacent cells 5 is plugged in one end portion on the mutually opposite side by means of the bonding material layer 3 and then forming the bonded honeycomb segments into a desired shape, where the structure has a cutout portion 2 in a part of the fluid passage end portion, and each of the predetermined cells 5 constituting the cutout portion 2 is also plugged in one end portion in such a manner that each of adjacent cells 5 is plugged on the mutually opposite side.
The whole shape of a plugged honeycomb structure 20 of the present invention is a desired shape suitable for an exhaust gas purification filter, such as a cylindrical shape or an oval shape, with a cutout portion 2 in the fluid passage end portion. In a plugged honeycomb structure 20 of the present invention, the cutout portion 2 is formed to have a desired size at a desired position in accordance with the application and the purpose. At the same time, plugging is performed to the predetermined cells 5 in the whole range of the passage end face including the cutout portion 2 to suppress deterioration in purification performance due to shape processing.
As a material for the unitarily formed plugged honeycomb structure 20a and the honeycomb segment 1 constituting the bonding type plugged honeycomb structure 20b, ceramic is preferable, and it is preferably at least one kind selected from the group consisting of silicon carbide, silicon-silicon carbide based composite material, cordierite, mullite, alumina, spinel, silicon carbide-cordierite based composite material, lithium aluminum silicate, aluminum titanate, and iron-chrome-aluminum based alloy. In particular, as the plugged honeycomb structure 20b shown in Fig. 4, in the case of integrally bonding a plurality of honeycomb segments 1 (1a, 1b) by means of the bonding material layer 3, silicon carbide or silicon-silicon carbide based composite material is more preferable among these materials. Since silicon carbide has relatively large thermal expansion coefficient, a honeycomb structure formed by the use of silicon carbide as the framework and having a large size sometimes causes a defect due to thermal shock upon use. However, in a structure where a plurality of honeycomb segments 1 are integrally bonded together by means of the bonding material layer 3, the bonding material layer 3 buffers expansion and contraction of silicon carbide to inhibit a defect in the honeycomb segment 1 from generating.

In addition, as the material for the bonding material layer 3, there can be used a slurried material obtained by dispersing a filler such as inorganic fibers, colloidal silica, clay, SiC particles, an organic binder, and a resin balloon in a dispersion medium such as water.

In the exhaust gas purification apparatus 110 shown in Fig. 5A, a plugged honeycomb structure 20 having the cutout portion 2 formed therein is disposed as the DPF at the back of the honeycomb catalyst body 9 in the container 15. At this time, it is preferable that the DPF 8 is positioned in such a manner that the cutout portion 2 faces downward (toward ground) of the exhaust gas purification apparatus 110 when the exhaust gas purification apparatus 110 is mounted on a vehicle. Solid and liquid foreign matters flowing from the upstream side of the exhaust gas flow go downward of the exhaust gas purification apparatus 110 according to the gravity. Therefore, damages tend to concentrate particularly in the lower portions of the inner walls of the container 15 and the inflow hole side end face 11 of the DPF 8. By disposing the DPF 8 in such a manner that the cutout portion 2 faces downward, a space for the foreign substances can be secured in the lower portions portion of the container 15 to reduce frequency of direct collision of foreign substances with the end face of the DPF 8 and shock upon collision. That is, by the use of a plugged honeycomb structure 20 of the present invention, deterioration in durability due to erosion can be inhibited even without extra equipment such as a wire mesh or a foreign substance-trapping pocket in the flow passage of the exhaust gas purification apparatus, and space saving and cost saving can be realized in the exhaust gas purification apparatus.

In the exhaust gas purification apparatus 120 shown in Fig. 5B, the plugged honeycomb structure 20 having the cutout portion 2 formed therein is disposed as a DPF 8 at the back of the honeycomb catalyst body 9 in the container 15, and the foreign substance-trapping pocket 13 for trapping foreign substances flowing from the upstream together with exhaust gas and causing damages in the DPF 8 is further provided to allow the cutout portion 2 of the DPF 8 to function as an introduction passage to release the foreign substances toward the foreign substance-trapping pocket 13. Such a constitution enables a large amount of foreign substances flowing into the apparatus to be collected in the foreign substance-trapping pocket 13 without allowing the foreign substances to collide with the inflow hole side end face 11 of the DPF 8. At this time, it is preferable that the DPF 8 is positioned in such a manner that the cutout portion 2 faces downward (toward ground) of the exhaust gas purification apparatus 120 when the exhaust gas purification apparatus 120 is mounted on a vehicle.

In addition, the plugged honeycomb structure 20 of the present invention has an advantage of not only exhibiting an erosion inhibition effect in a limited space, but also being responsive to a container 15 having a specific shape as shown in Fig. 5C. In the case of having a restriction in the usable space such as a lower portion of a vehicle, it is an effective measure to inhibit generation of a dead space in the vicinity of the exhaust gas purification apparatus after mounting on a vehicle together with designing the exhaust gas purification apparatus to be small. That is, upon attaching the exhaust gas purification apparatus to the vehicle, the container shape of the exhaust gas purification apparatus is previously transformed in accordance with the space shape of the place for the attachment to utilize the limited space at a maximum without generating an unnecessary space. For the purpose, a honeycomb structure having a shape according to the container shape is required, and, therefore, a plugged honeycomb structure 20 of the present invention is suitably used.

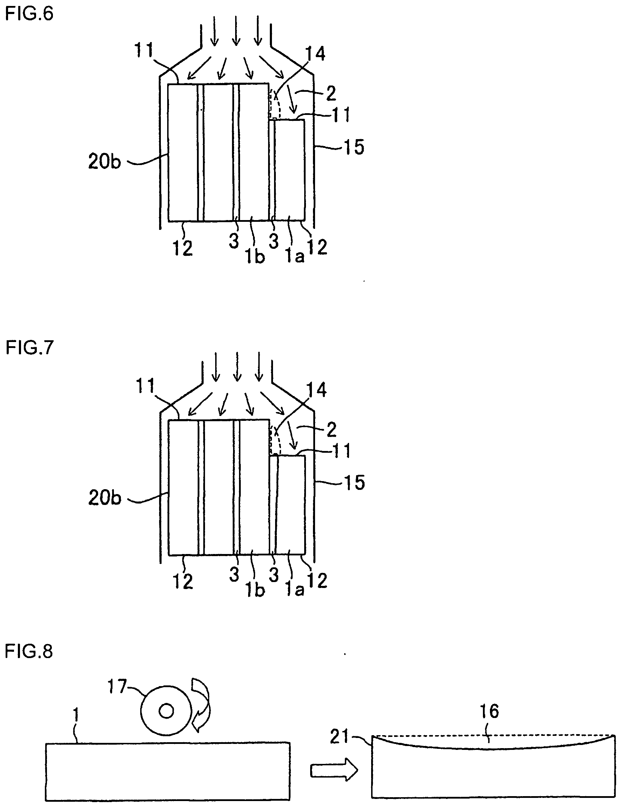

Fig. 6 is a cross-sectional view schematically showing a scene where exhaust gas flows into an embodiment of a plugged honeycomb structure of the present invention, and Fig. 7 is a cross-sectional view schematically showing a scene where exhaust gas flows into another embodiment of a plugged honeycomb structure of the present invention. At this time, in the plugged honeycomb structures 20b shown in Figs. 6 and 7, since exhaust gas flows away from the corner portion 14 of the cutout portion, the exhaust gas hardly flows into the cells located under the corner portion 14 of the cutout portion. Therefore, PM deposition on the partition walls of the cells is reduced, and the PM deposition amount in the short segment 1a may become uneven. As a result, when the filter is regenerated by combusting the deposited PM, uneven distribution of thermal stress generated by the difference in the PM deposition amount may cause crack generation.

Therefore, in a plugged honeycomb structure 20b of the present invention, as shown in Fig. 7, the relation between an average thickness Ts(in) on a fluid inflow hole side end face 11 (here, cutout portion formation side end face) of the bonding material layer 3 bonding a short segment 1a and a long segment 1b together and an average thickness T (in) on the fluid inflow hole side end face of the bonding material layer bonding the short segment 1a to another short segment 1a or bonding the long segment 1b to another long segment 1b is Ts(in) > T(in). In such a design, since an area where the exhaust gas hardly flows on the downstream side of the corner portion 14 of the cutout portion has not cells 5 but bonding material layers 3, unevenness of PM deposition in the short segment 1a can be inhibited, and crack generation due to uneven distribution of thermal stress upon filter regeneration can effectively be inhibited.

Incidentally, it is more preferable that the relation between the average thickness Ts(in) and the average thickness T(in) is Ts(in) = (1.1 to 5.0) × T(in). When the relation is Ts(in) < 1.1 × T(in), unevenness of PM deposition in the short segment 1a cannot be inhibited, and a crack generation inhibition effect cannot be obtained, which is not preferable. On the other hand, when the relation is Ts(in) > 5.0 × T(in), thermal conductivity between the long segment 1b and the short segment 1a is deteriorated to increase the temperature difference caused upon PM regeneration, and a crack is easily caused, which is not preferable.

However, by increasing the average thickness Ts (in) in comparison with a general case, since the width of the short segment in contact in a direction perpendicular to the axial direction becomes relatively small to reduce a filter area, pressure loss upon use is sometimes increased. Therefore, in a plugged honeycomb structure of the present invention, as shown in Fig. 7, it is preferable that the relation between the average thickness Ts(out) on an fluid outflow hole side end face 12 and the aforementioned average thickness Ts(in) of the bonding material layer 3 for bonding the short segment 1a and the long segment 1b is Ts (out) < Ts (in) and that the thickness of the bonding material layer 3 is gradually reduced from the average thickness Ts(in) toward the average thickness Ts(out) . Such a design enables to suppress the decrease in the filter area at minimum and inhibit increase in pressure loss upon use.

In addition, it is more preferable that the relation between the aforementioned average thickness Ts(out) and the average thickness Ts(in) is Ts(out) ≤ 0.9 × Ts(in) and Ts (out) ≥ 0.2 mm. In the case of Ts(out) < 0.2 mm, heat transfer from the long segment 1b to the short segment 1a upon PM regeneration increases to increase the temperature difference between the outer peripheral portion and the inner portion, and thereby a crack may be caused easily starting on the long segment 1b. On the other hand, in the case of Ts(out) > 0.9 × Ts (in), an effect in inhibiting pressure loss from increasing by securing the filter area may not be obtained sufficiently.

At this time, as the short segment 1a, as shown in Fig. 8, a depressed segment 21 having a depression 16 in an axial direction in at least one of the side faces is preferably used. More specifically, it is preferable to use, as the short segment 1a, a depressed segment 21 obtained by forming a depression 16 using a pressing means 17 such as a roller on at least one of the side faces of the honeycomb segment 1 still having flexibility before drying and firing before bonding. Incidentally, Fig. 8 is a process drawing schematically showing a step where a depression is formed on a side face of a honeycomb segment. At this time, the curved shape, the depth, and the like of the depression 16 can be made as desired in accordance with the depth of the bonding material layer of the plugged honeycomb structure 20b to be obtained. In addition, since a pressing means 17 such as a roller is used for manufacturing the depressed segment 21, the depression can be formed on a desired side face among the side faces of the honeycomb segment 1, and a desired thickness can be given to all the bonding material layers 3 bonding the short segment 1a with the long segment 1b.

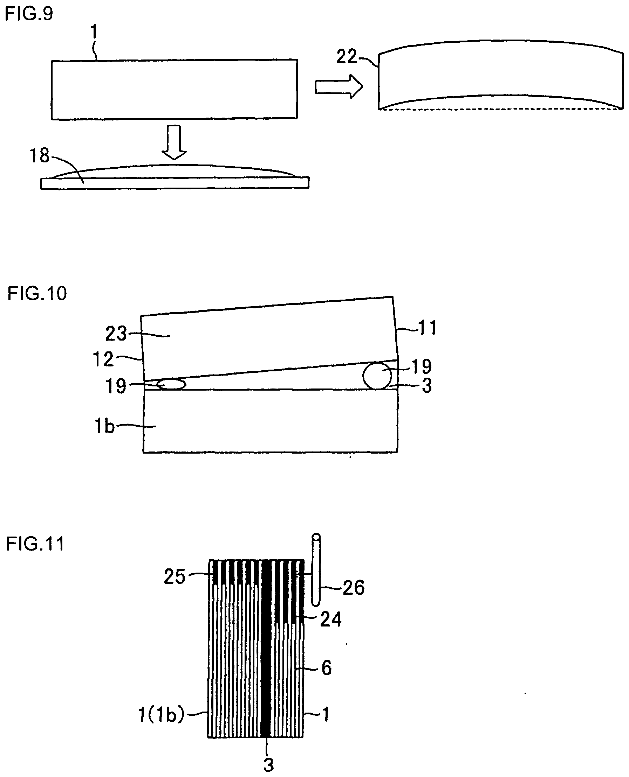

In addition, as the short segment 1a, as shown in Fig. 9, an arc-shaped segment 22 where both of the side faces are curved in an arc shape in the axial direction is also preferably used. More specifically, it is preferable to use, as the short honeycomb segment 1a, an arc-shaped segment 22 obtained by abutting one of the side faces of the honeycomb segment 1 still having flexibility before drying and firing before bonding against the curve-forming embossing means 18 having one horizontal face and the other predetermined protruding face to generate a curve over the whole honeycomb segment 1, followed by drying and firing. Incidentally, Fig. 9 is a process drawing schematically showing a step where an arc-shaped curve is formed over a whole honeycomb segment. At this time, the protruding shape of the curve-forming embossing means 18 can be formed to be desired curving shape, depth, and the like in accordance with the thickness of the bonding material layer of the plugged honeycomb structure 20b to be obtained.

Further, as the short segment 1a, as shown in Fig. 10, it is also preferable to use the oblique segment 23 bonded obliquely with respect to the long segment 1b using the bonding material spacer 19. Fig. 10 is a cross-sectional view schematically showing a state that a short segment is bonded obliquely with respect to a long segment using a bonding material spacer.

As a method for manufacturing a plugged honeycomb structure 20b provided with an oblique segment 23, the short segment 1a is bonded obliquely with respect to the long segment 1b with using a plurality of bonding material spacers 19 having different thickness in such a manner that the relation between the thickness S(in) of the bonding material spacer 19 on the inflow hole side end face 11 (here, cutout portion formation side end face)in a direction perpendicular to the axial direction of the honeycomb structure and the thickness S(out) of the bonding material spacer 19 on the outflow hole side end face 12 (here, the end face opposite to the cutout portion formation side) in a direction perpendicular to the axial direction of the honeycomb structure on bonding faces between the short segment and the adjacent long segment is S(out) ≤ 0.9 × S(in) and S(out) ≥ 0.2 mm. At this time, though the short segment 1a is bonded in an oblique state with respect to the long segment 1b, a plugged honeycomb structure 20b having a predetermined bonding material layer thickness can be obtained by performing the outer periphery processing.

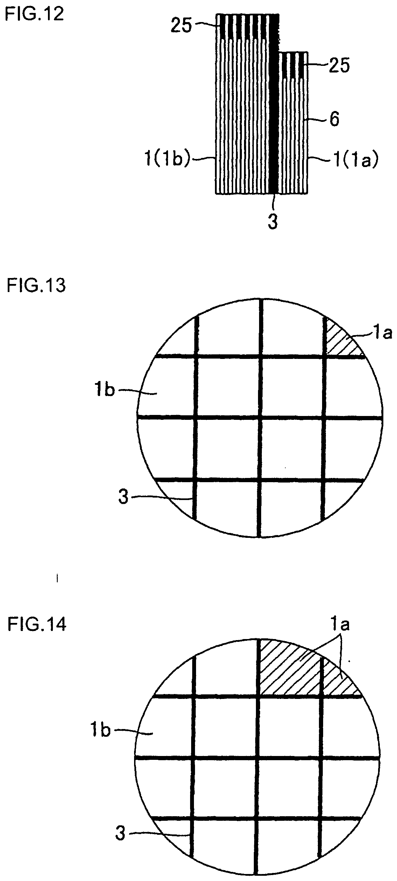

Among plugged honeycomb structures 20 not according to the present invention, a bonded type plugged honeycomb structure 20 (20b) where a plurality of honeycomb segments 1 (1a, 1b) are integrally bonded by means of the bonding material layer 3 can be manufactured by, as shown in Figs. 11 and 12, not according to the present invention, bonding the honeycomb segment 1 having long plugging portions 24 to serve as the short segment 1a with the long segment 1b having short plugging portions 25 whose depth is shorter than that of the long plugging portions 24 and then cutting the long plugging portions formation side end portion of the honeycomb segment 1 to have a predetermined depth. Incidentally, Fig. 11 is a partial cross-sectional view in an axial direction schematically showing a plugged honeycomb structure before cutting the long plugging portions formation side end portion, and Fig. 12 is a partial cross-sectional view in an axial direction schematically showing a plugged honeycomb structure after cutting the long plugging portions formation side end portion. Though the plugging portions 25 in the end portion opposite to the cutout portion formation side are omitted from Figs. 11 and 12 for convenience of drawing, each of adjacent cells 5 is plugged in an passage end portion on the mutually opposite side in any of the honeycomb segments 1 (1a, 1b). There is no difference in depth of the plugging portion on the end portions opposite to the cutout portion formation side in the honeycomb segments (1a, 1b), and plugging portions 25 having a fixed depth are formed.

In the first place, a mask tape is applied on one end face (end face on the cutout portion formation side) of the honeycomb segment 1 after drying, and holes are made by a laser in the positions where the plugging portions are to be formed. With regard to the segment to serve as the long segment 1b, the end portion having the mask applied thereon of the honeycomb segment 1 is immersed in plugging slurry having a depth of 0.5 to 2.0 mm to form plugging portions 25. With regard to the segment to serve as the short segment 1a, in the same manner as in the case of the segment to serve as the long segment 1b, the end portion having the mask applied thereon of the honeycomb segment 1 is immersed in plugging slurry having a predetermined depth to form long plugging portions 24. At this time, the depth of the plugging slurry can suitably be determined in accordance with the depth of the cutout portion 2 of the plugged honeycomb structure 20b to be obtained. Further, in any of the honeycomb segments 1, a mask tape is applied also on the other end face (end face opposite to the cutout portion formation side) in such a manner that adjacent cells 5 are plugged in a passage end portion on the mutually opposite side, holes are made by a laser in only the positions for forming plugging portions, the end portion is immersed in plugging slurry having a depth of 0.5 to 2.0 mm to form plugging portions 25. Next, a predetermined number of each kind of the honeycomb segments 1 are piled up in accordance with the combination and bonded with one another to match both ends of the honeycomb segments 1, followed by pressurizing and drying to obtain a honeycomb segment layered body 30. At this time, from the viewpoint of forming the cutout portion 2 to inhibit erosion, it is preferable to dispose the honeycomb segment 1 to serve as the short segment 1a at a corner of the honeycomb segment layered body 30 (see Fig. 13) in such a manner that the short segment 1a constitutes a corner portion of the honeycomb structure 20b. In addition, when a cutout portion 2 is formed by a plurality of short honeycomb segments 1a, it is preferable that the honeycomb segments 1 to serve as the short segments 1a are disposed to be adjacent to each other (see Fig. 14). Incidentally, Fig. 13 is a schematic front view of an embodiment of a plugged honeycomb structure not according to the present invention viewed from a cutout portion formation direction, and Fig. 14 is a schematic front view of another embodiment of a plugged honeycomb structure of the present invention viewed from a cutout portion formation direction. In Figs. 13 and 14, the cells 5, partition walls 6, and the plugging portions 25 are omitted for convenience of drawing.

Next, the outer periphery processing is performed as necessary to the honeycomb segment layered body 30 obtained above, and the long plugging portions formation side end portion (cutout portion formation portion) of the honeycomb segment 1 having the long plugging portions 24 formed therein is cut by an end mill 26 in such a manner that a predetermined depth of the long plugging portions 24 remains to form the short segment 1a having plugging portions 25 having the same depth as that of the plugging portions 25 of the long segment 1b, thereby obtaining a desired plugged honeycomb structure 20b. In such a manufacturing method, since techniques in a conventional method for manufacturing a plugged honeycomb structure 10 can be used up to the bonding and the outer periphery processing, it is preferable. Incidentally, at this time, cutting by the end mill 26 is performed along the bonding material layer 3, the problems such as damages in the honeycomb segment 1 upon cutting and deterioration in strength of the honeycomb segments 1 (1a, 1b) after cutting are not caused.

In addition, a bonded type plugged honeycomb structure 20b where a plurality of honeycomb segments 1 (1a, 1b) are integrally bonded by means of the bonding material layer 3 can be manufactured also by bonding the short segment 1a formed to be shorter than the long segment 1b in the axial direction in advance as the short segment 1a with the long segment 1b and processing the outer periphery as necessary.

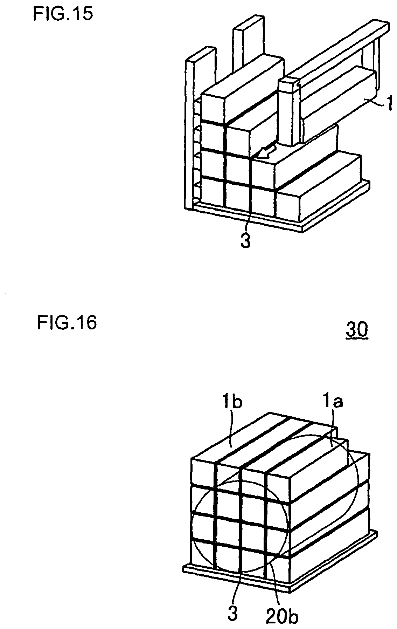

In the first place, a bonding material is applied on each of the bonding faces of the short segment 1a and the long segment 1b each manufactured to have a predetermined length in advance, and the segments are sequentially piled up in accordance with the desired number and combination (see Fig. 15) and bonded with one another to match both end faces on the cutout portion formation side and on the other side, followed by pressurizing and drying to obtain a honeycomb segment layered body 30 (see Fig. 16). At this time, from the viewpoint of forming the cutout portion 2 to inhibit erosion, it is preferable to dispose the short segment 1a at a corner of the honeycomb segment layered body 30 (see Fig. 13) in such a manner that the short segment 1a constitutes a corner portion of the honeycomb structure 20b. In addition, when a cutout portion 2 is formed by a plurality of short honeycomb segments 1a, it is preferable that the short honeycomb segments 1 are disposed to be adjacent to each other (see Fig. 14). Incidentally, Fig. 15 is a process drawing schematically showing a step of piling up honeycomb segments, and Fig. 16 is a perspective view schematically showing one embodiment of a honeycomb segment layered body.

Next, the outer periphery processing is performed as necessary to the honeycomb segment layered body 30 obtained above to obtain a desired plugged honeycomb structure 20b. In such a manufacturing method, since a post-step for cutting or the like is not necessary, it is preferable in the points of raw material yield and costs. Incidentally, though the short segment 1a may be manufactured by forming the plugging portions 25 in the honeycomb segment 1 manufactured to have a length suitable for the short segment 1a in the axial direction, it may be manufactured also by forming the long plugging portions 24 in the honeycomb segment 1 having the same length as the honeycomb segment 1 to serve as the long segment 1b in the axial direction and cutting the long plugging portions formation end portion in such a manner that the whole honeycomb segment 1 has a length suitable for the short segment 1a in the axial direction.

On the other hand, among the plugged honeycomb structures 20 not according to the present invention, the unitary type (non-bonded monolithic type) plugged honeycomb structure 20a formed by unitary formation is manufactured by the following manufacturing method because the cutout portion 2 cannot be formed on a segment basis unlike the aforementioned bonded type plugged honeycomb structure 20b. That is, long plugging portions 24 are formed in the predetermined cells 5 in the cutout portion formation portion of the honeycomb formed article obtained in advance by extrusion forming using a die having a desired cell shape, partition wall thickness, and cell density, short plugging portions 25 having a depth smaller than that of the long plugging portions 24 are formed in the predetermined cells 5 in the portion other than the cutout portion formation portion, and the cutout portion formation portion is cut to have a predetermined length.

More specifically, a mask tape is applied on one end face (end face on the cutout portion formation side) of the honeycomb formed article after drying, and holes are made by a laser in the positions where the plugging portions are to be formed in the cutout portion formation portion. The end portion having the mask of the honeycomb formed article is immersed in plugging slurry to form the long plugging portions 24. At this time, the depth of the plugging slurry can suitably be determined according to the depth of the cutout portion 2 of the plugged honeycomb structure to be obtained. Next, holes are made by a laser in the positions where the plugging portions are to be formed in the other portion (portion other than the cutout portion formation portion), and the end portion of the honeycomb formed article is immersed in plugging slurry having a depth of 0.5 to 2.0 mm to form plugging portions 25 having a desired depth. In addition, the other end portion is immersed in plugging slurry having a depth of 0.5 to 2.0 mm in such a manner that adjacent cells 5 are plugged in a passage end portion on mutually opposite side to form plugging portions 25. The outer periphery processing is performed as necessary to the plugged honeycomb formed article obtained above, and the cutout portion formation portion is cut by an end mill 26 in such a manner that the long plugging portions 24 remain to have the same depth as the plugging portions 25, thereby obtaining a desired plugged honeycomb structure 20a. Incidentally, at this time, in the end portion opposite to the cutout portion formation portion side, there is no difference in depth of the plugging portions among the cells 5, and plugging portions 25 having a fixed depth are formed.

According to the method for manufacturing a plugged honeycomb structure of the present invention, there can be obtained a plugged honeycomb structure having a cutout portion formed to have a desired size in a desired position. By the use of such a plugged honeycomb structure as a DPF, an erosion inhibition effect is exhibited in a limited space in a purification apparatus, and various effects such as use for a container having a specific shape can be exhibited as an in-car filter. Further, according to a method for manufacturing a plugged honeycomb structure of the present invention, deterioration in purification performance and strength due to shape processing can be inhibited, and a plugged honeycomb structure excellent in raw material yield and costs can be obtained.

Example

Hereinbelow, the present invention will be described in more detail on the basis of Examples 13-25. However, the present invention is by no means limited to these Examples. Examples 1-12 are not according to the invention.

(Comparative Example 1)

A ceramic forming material obtained by adding a binder, a dispersant, water, and the like to a silicon carbide composition powder and kneading them was subjected to extrusion forming using a die having a diameter of 144 mm to obtain a cylindrical unfired honeycomb formed article having a plurality of cells separated by porous partition walls and functioning as fluid passages and having a diameter of 144 mm and a length of 152 mm. The honeycomb formed article was dried at 140°C for two hours, and plugging portions having a depth of 6mm were formed in such a manner that each of adjacent cells is plugged in one end portion on the mutually opposite side to obtain a plugged honeycomb structure. A coating material was applied on the outer periphery of the body of the plugged honeycomb formed article and dried and hardened at 700°C for two hours to manufacture a unitary type plugged honeycomb structure having a diameter of 144 mm and having a length of 152 mm.

(Example 1)

By cutting a corner portion of the plugged honeycomb structure of Comparative Example 1 by an end mill to form a cutout portion having a cross section with a side length of 20 mm and a depth of 3 mm, a unitary type plugged honeycomb structure of Example 1 was manufactured.

(Examples 2 to 4)

Unitary type plugged honeycomb structures of Examples 2 to 4 were manufactured in the same manner as in Example 1 except that the depth of the cutout portion was made as shown in Table 1.

(Comparative Example 2)

There were prepared 16 honeycomb segments each having a square cross section with a side length of 35 mm in a direction perpendicular to the axial direction, a length of 152 mm in the axial direction, and a depth of plugging portions of 6 mm. After a bonding material was applied on the bonding face where each of the honeycomb segments was bonded with an adjacent honeycomb segment, the honeycomb segments were piled up. After pressure was applied to the piled 16 honeycomb segments to bond them together, they were dried at 140°C for two hours to obtain a honeycomb segment layered body. Next, after the outer periphery of the honeycomb segment layered body was cut into a cylindrical shape, a coating material was applied and hardened at 700°C for two hours to manufacture a bonded type plugged honeycomb structure having a diameter of 144 mm and a length of 152 mm.

(Example 5)

As the long segments, there were prepared 15 honeycomb segments each having a square cross section with a side length of 35 mm in a direction perpendicular to the axial direction, a length of 152 mm in the axial direction, and a depth of plugging portions of 6 mm. As the short segment, there was prepared a honeycomb segment having a square cross section with a side length of 35 mm in a direction perpendicular to the axial direction, a length of 149 mm in the axial direction, and a depth of plugging portions of 6 mm. After a bonding material was applied on the bonding face where each of the honeycomb segments was bonded with an adjacent honeycomb segment, the honeycomb segments were piled up. After pressure was applied to the piled 16 honeycomb segments to bond them together, they were dried at 140°C for two hours to obtain a honeycomb segment layered body having a cutout portion with a depth of 3 mm. At this time, the short segment was disposed at the corner of the honeycomb segment layered body. In addition, all the honeycomb segments were piled up to match the end faces opposite to the cutout portion formation side, and the difference in level by the short segment, that is, the cutout portion was formed in only one passage end portion. Next, after the outer periphery of the honeycomb segment layered body was cut into a cylindrical shape, a coating material was applied and hardened at 700°C for two hours to manufacture a bonded type plugged honeycomb structure having a diameter of 144 mm and a length of 152 mm.

(Examples 6 to 8)

Bonded type plugged honeycomb structures of Examples 6 to 8 were manufactured in the same manner as in Example 5 except that the length of the short segment in the axial direction was adjusted in such a manner that the cutout portion has a depth shown in Table 1.

(Example 9)

A bonded type plugged honeycomb structure of Example 9 was manufactured in the same manner as in Example 5 except that 14 long segments and two short segments were used. Incidentally, at this time, the two short segments were disposed to be adjacent to each other and to constitute a corner portion of the honeycomb segment layered body.

(Examples 10 to 12)

Bonded type plugged honeycomb structures of Examples 10 to 12 were manufactured in the same manner as in Example 9 except that the length of the short segments in the axial direction was adjusted in such a manner that the cutout portion has a depth shown in Table 1.

The plugged honeycomb structures of Examples 1 to 12 and Comparative Examples 1 and 2 were used as DPFs, and an erosion test and a pressure loss measurement test were performed by the following methods.

(Evaluation)

Emission test:

On an engine test bed (2.0 L engine displacement), a DPF was mounted in an underfloor space. As foreign substances, 10 iron balls having a diameter of about 1.5 mm were put in front of the DPF, and a repeated test of a NEDC cycle mode was performed. PM emission was measured at 100-cycle intervals . For evaluation of the PM emission, the PM amount was measured by a weight method according to a measurement method specified by Euro. 4, and evaluations were given with the cycle number when the PM emission value exceeds 5 mg/km being defined as the PM allowable cycle number. (When erosion proceeds, the end face is bored, and the PM emission value sharply rises when the plugging portion is lost. Therefore, the allowable cycle number can be known by observation of the PM emission value.) Because one cycle has 11 km, the PM allowable distance [km] was calculated out from the PM allowable cycle number. The results are shown in Table 1.

Pressure loss measurement test:

Soot was deposited on a DPF up to 4 g/L under the conditions of a gas flow rate of 2.0 to 3.0 Nm$^3$/min. and a gas temperature of 150 to 250°C using an apparatus to generate soot (PM) by burner combustion, and pressure loss [kPa] between the upstream position and the downstream position of the DPF was measured at the point of 70 km/h during driving in the aforementioned cycle mode. The results are shown in Table 1.

Table 1

|  | Structure | cutout portion structure | | | | PM allowable cycle number | PM allowable distance [km] | Pressure loss [kPa] |
|  |  | Presence | Figure | Side length of cross section [mm] | Depth [mm] |  |  |  |
|---|---|---|---|---|---|---|---|---|
| Comp. Ex. 1 | Unitary type | None | - | - | - | 14,100 | 155,100 | 3.7 |
| Comp. Ex. 2 | Bonded type | None | - | - | - | 14,300 | 157,300 | 4.0 |
| Example 1 | Unitary type | Present | - | 20×20 | 3 | 14,200 | 156,200 | 3.8 |
| Example 2 | Unitary type | Present | - | 20×20 | 5 | 14,600 | 160,600 | 4.0 |
| Example 3 | Unitary type | Present | - | 20×20 | 30 | 15,200 | 167,200 | 4.7 |
| Example 4 | Unitary type | Present | - | 20×20 | 35 | 15,400 | 169,400 | 5.6 |
| Example 5 | Bonded type | Present | Fig. 13 | 20×20 | 3 | 14,400 | 158,400 | 4.0 |
| Example 6 | Bonded type | Present | Fig. 13 | 20×20 | 5 | 14,700 | 161,700 | 4.2 |
| Example 7 | Bonded type | Present | Fig. 13 | 20×20 | 30 | 15,400 | 169,400 | 4.6 |

(continued)

| | Structure | cutout portion structure | | | | PM allowable cycle number | PM allowable distance [km] | Pressure loss [kPa] |
|---|---|---|---|---|---|---|---|---|
| | | Presence | Figure | Side length of cross section [mm] | Depth [mm] | | | |
| Example 8 | Bonded type | Present | Fig. 13 | 20×20 | 35 | 15,600 | 171,600 | 5.7 |
| Example 9 | Bonded type | Present | Fig. 14 | 60×32 | 3 | 14,500 | 159,500 | 4.2 |
| Example 10 | Bonded type | Present | Fig. 14 | 60×32 | 5 | 14,900 | 163,900 | 4.4 |
| Example 11 | Bonded type | Present | Fig. 14 | 60×32 | 30 | 15,800 | 173,800 | 4.9 |
| Example 12 | Bonded type | Present | Fig. 14 | 60×32 | 35 | 16,000 | 176,000 | 5.9 |

In both the unitary type Comparative Example 1 and the bonded type Comparative Example 2, both of which are conventional DPFs (plugged honeycomb structure) with no cutout portion, 160,000 km as the target value of the PM allowable distance was not achieved. On the other hand, in DPFs (plugged honeycomb structures) not according to the present invention with a cutout portion provided thereon, the PM allowable distance was increased, and it was found out that they were effective in erosion inhibition. In particular, in the DPFs each having a cutout portion with a depth of 5 mm or more, the PM allowable amount of 160,000 km as the target value or more was achieved, and it was found out that the erosion inhibition was functioned more effectively. In addition, with regard to the side length of a cross section of the cutout portion, both the DPF having the side lengths of the cross section of 20 mm × 20 mm and the DPF having the side lengths of 60 mm × 32 mm showed the erosion inhibition effect. From this, it was found out that the erosion inhibition effect do not depend on the side length of a cross section of the cutout portion, but depends on the depth mainly. This is considered to be because the foreign substances roll mainly in the axial direction along the exhaust gas flow when they roll by engine vibrations. In addition, under the present conditions, when the pressure loss exceeds 6 kPa, the vehicle fuel consumption deterioration rate by the mounting of the DPF on the vehicle exceeds 5%, which is not preferable. It was found out that, when the depth of the cutout portion is 35 mm or less, the pressure loss can be suppressed to less than 6 kPa which is the target value. That is, from the results of Table 1, it was found out that a particularly preferable depth of the cutout portion is 5 mm to 35 mm regardless of the side length of a cross section. In addition, from the results of Table 1, it was found out that the bonded type DPFs have a higher erosion inhibition effect in comparison with unitary type DPFs. This is considered to be because the bonded type DPFs are excellent in durability because the cutout portion is surrounded by a bonding material having strength higher than that of a segment substrate.

(Example 13)

As the long segments, there were prepared 14 honeycomb segments each having a square cross section having a side length of 36.2 mm in a direction perpendicular to the axial direction and a length of 152.4 mm in the axial direction. As the short segments, there were prepared two honeycomb segments each having a square cross section with a side length of 36.2 mm in a direction perpendicular to the axial direction and a length of 137.4 mm in the axial direction. In each of the honeycomb segments, plugging was performed in such a manner that each of adjacent cells was plugged in one end portion on the mutually opposite side, and the plugging portions had a depth of 6 mm. After a bonding material was applied on the bonding face where each of the honeycomb segments was bonded with an adjacent honeycomb segment, the honeycomb segments were piled up in such a manner that the average thickness T (in) on the fluid inflow hole side end face of the bonding material layer bonding a short segment with another short segment or bonding a long segment with another long segment was 1.0 mm and that the average thickness Ts (in) on a fluid inflow hole side end face of the bonding material layer bonding a short segment and a long segment together was 1.1 mm. After pressure was applied from outside to the piled 16 honeycomb segments to bond them together, they were dried at 140°C for two hours to obtain a honeycomb segment layered body. At this time, two short segments were disposed to be adjacent to each other and to constitute a corner portion of the honeycomb segment layered body. In addition, all the honeycomb segments were piled up to match the end faces opposite to the cutout portion formation side, and the difference in level formed by the short segment, namely the cutout portion, was formed only in the inflow hole side end portion. Next, after the outer periphery of the honeycomb segment layered body was cut into a cylindrical shape, a coating material was applied and hardened at 700°C for two hours to manufacture a bonded type plugged honeycomb structure having a diameter of 143.8 mm and a length of 152.4 mm. The plugged honeycomb structure was used as a DPF, and a regeneration limit test and a pressure loss measurement test were performed.

(Examples 14 to 17, Comparative Examples 3 to 5)

The plugged honeycomb structures of Examples 14 to 17 and Comparative Examples 3 to 5 were manufactured in the same manner as in Example 13 except that the average thickness Ts(in) on a fluid inflow hole side end face of the bonding material layer bonding a short segment and a long segment together was as shown in Table 2. The plugged honeycomb structures were used as DPFs, and a regeneration limit test and a pressure loss measurement test were performed in the same manner as in Example 13.

(Evaluation)

Regeneration limit test:

Regeneration (PM combustion) of the filter was performed by using the plugged honeycomb structures as DPFs and sequentially increasing the soot (PM) deposit amount to confirm the limit of crack generation. Post-injection was turned on in the state of a soot deposition amount of 10 g/L, an engine rotation of 1800 rpm, and an engine torque of 90 Nm, and then post-injection was turned off when the pressure loss between the upstream position and the downstream position of the DPF started falling. The maximum temperature gradient [°C/cm] in the short segment outlet side end face and the maximum temperature difference [°C] between the short segment and the long segment at the position of 50 mm from the outlet side end face upon shifting the engine state to the idling state were measured, and the presence/absence of crack generation in the DPF after the test was confirmed. The results are shown in Table 2. With regard to presence/absence of crack generation, observation was given regarding an end-face-crack and a ring-off-crack, and the results are shown by "present" in the case that any crack generation was confirmed and "none" in the case that no crack generation was confirmed.

Incidentally, the end-face-crack means a crack which can generate in the DPF outlet side end face when combusting deposited soot upon filter regeneration and mainly the crack generating due to thermal stress by temperature gradient generated between the segment central portion and the segment outer peripheral portion when the temperature of the segment becomes high. That is, the maximum temperature gradient in the short segment outlet side end face serves as an index of the cause of the end-face-crack generation in the short segment. As the method for measuring temperature, temperature was measured at five points, i.e., four corners of the outlet side end face of the short segment and the central portion of the segment to calculate the maximum temperature gradient upon filter regeneration.

In addition, the ring-off-crack means a crack which can generate along the outer periphery of the DPF when combusting deposited soot upon filter regeneration and mainly the crack generating due to tensile stress generated by the difference in thermal expansion due to the temperature difference between the inside segment and the outside segment when the temperature inside the DPF becomes high or a crack generating due to bending stress generated in the outside segment due to the difference in thermal expansion between the central portion and the outer peripheral portion of the DPF when the temperature of the central portion of the DPF is high. That is, the maximum temperature difference between the short segment and the long segment serves as an index of the cause of the ring-off-crack generation in the peripheral portion of the short segment. As the temperature measurement method, temperature was measured in the central portion of the short segment at the position of 50 mm from the outlet side end face and in the central portion of an adjacent long segment to calculate the maximum temperature difference between the segments upon filter regeneration.

Pressure loss measurement test:

Soot was deposited on a DPF under the conditions of a gas flow rate of 2.0 to 3.0 $Nm^3$/min. and a gas temperature of 150 to 250°C using an apparatus to generate soot by burner combustion, and pressure loss between the upstream position and the downstream position of the DPF was measured in relation with the soot deposition amount. Using the pressure loss value when the soot of 5 g/L was deposited, the pressure loss increase rate [%] on the basis of the pressure loss value of Comparative Example 3 was obtained. The results are shown in Table 2.

Table 2

| | Comp. Ex. 3 | Comp. Ex. 4 | Example 13 | Example 14 | Example 15 | Example 16 | Example 17 | Comp. Ex. 5 |
|---|---|---|---|---|---|---|---|---|
| Ts(in) [mm] | 1.00 | 1.05 | 1.10 | 2.00 | 3.00 | 4.00 | 5.00 | 6.00 |
| T(in) [mm] | 1.00 | 1.00 | 1.00 | 1.00 | 1.00 | 1.00 | 1.00 | 1.00 |
| Ts(in) / T(in) | 1.00 | 1.05 | 1.10 | 2.00 | 3.00 | 4.00 | 5.00 | 6.00 |
| Maximum temperature gradient in short segment outlet side end face [°C/cm] | 225 | 191 | 148 | 132 | 128 | 129 | 125 | 128 |
| Maximum temperature difference between short segment and long segment at 50mm from outlet side end face | 156 | 169 | 201 | 236 | 255 | 275 | 289 | 310 |
| Crack generation | Present (end-face-crack) | Present (end-face-crack) | None | None | None | None | None | Present (ring-off-crack) |
| Pressure loss increase rate [%] (based on Comparative Example 3) | 0.0 | 0.1 | 0.2 | 2.2 | 4.6 | 7.1 | 9.9 | 12.8 |

From Table 2, it was found out that crack generation (end-face-crack) can be inhibited by reducing temperature gradient in the short segment upon filter regeneration by inhibiting soot distribution bias in the short segment by increasing the average thickness Ts(in) of the bonding material layer in the fluid inflow hole side end face (here, cutout portion formation side end face). However, it was found out that, when Ts(in) is made too large, the temperature difference between the short segment and the long segment upon filter regeneration increases to easily cause a crack (ring-off-crack) beginning at the short segment. Also, it was found out that pressure loss increases as Ts(in) increases.

(Example 18)

As the long segments, there were prepared 14 honeycomb segments each having a square cross section having a side length of 36.2 mm in a direction perpendicular to the axial direction and a length of 152.4 mm in the axial direction. As the short segments, there were prepared two honeycomb segments each having a square cross section having a side length of 36.2 mm in a direction perpendicular to the axial direction and a length of 137.4 mm in the axial direction, where one and adjacent two of the side faces are respectively processed into a depressed shape by a roller. After a bonding material was applied on the bonding face where the honeycomb segment was bonded with an adjacent honeycomb segment of each of the honeycomb segments, the honeycomb segments were piled up in such a manner that the average thickness T(in) on the fluid inflow hole side end face (here, cutout portion formation side end face) of the bonding material layer bonding the short segment with another short segment or bonding the long segment with another long segment was 1.0 mm, that the average thickness Ts(in) on a fluid inflow hole side end face of the bonding material layer bonding a short segment and a long segment together was 1.1 mm. and that the average thickness Ts(out) in the fluid outflow hole side end face (here, end face opposite to the cutout portion formation side) of the bonding material layer for bonding the short segment with the long segment was 0.99 mm. After pressure was applied to the piled 16 honeycomb segments to bond them together, they were dried at 140°C for two hours to obtain a honeycomb segment layered body. At this time, two short segments were disposed to be adjacent to each other and to constitute a corner portion of the honeycomb segment layered body and positioned in such a manner that each of the side face processed into the depressed shape was brought into contact with the long segment. In addition, all the honeycomb segments were piled up to match the end faces opposite to the cutout portion formation side, and the difference in level by the short segment, that is, the cutout portion was formed only in the inflow hole side end portion. Next, after the outer periphery of the honeycomb segment layered body was cut into a cylindrical shape, a coating material was applied and hardened at 700°C for two hours to manufacture a bonded type plugged honeycomb structure having a diameter of 143.8 mm and a length of 152.4 mm. The plugged honeycomb structure was used as a DPF, and a regeneration limit test and a pressure loss measurement test were performed in the same manner as in Example 13. The results are shown in Table 3.

However, in the regeneration limit test, the maximum temperature gradient [°C/cm] in the position of 50 mm from the outlet side end face of the long segment adjacent to a short segment, and presence/absence of crack generation of the DPF after the test was confirmed. With regard to the presence/absence of crack generation, observation was performed regarding the ring-off-crack. "Present" was given when a crack is confirmed, and "none" was given when no crack was confirmed. Here, the maximum temperature gradient at the position of 50 mm from the outlet side end face of the long segment adjacent to the short segment serves as an index of the cause of the ring-off-crack generation in the peripheral portion of the short segment due to a crack generated in the long segment. As the temperature measurement method, temperature was measured in the side edge portion on the short segment side and in the central portion of the short segment at the position of 50 mm from the outlet side end face of the long segment adjacent to the short segment to calculate the maximum temperature gradient upon filter regeneration. In addition, in the pressure loss measurement test, each pressure loss value was shown as the pressure loss decrease rate [%] on the basis of the pressure loss value of Example 13.

(Examples 19 to 21, Comparative Examples 6 and 7)

Plugged honeycomb structures of Examples 19 to 21 and Comparative Examples 6 and 7 were manufactured in the same manner as in Example 18 except that the average thickness Ts(out) on the fluid outflow hole side end face of the bonding material layer for bonding the short segment with the long segment was changed as shown in Table 3. The plugged honeycomb structures were used as DPFs, and a regeneration limit test and a pressure loss measurement test were performed in the same manner as in Example 18. The results are shown in Table 3.

Table 3

|  | Example 18 | Example 19 | Example 20 | Example 21 | Comp. Ex. 6 | Comp. Ex. 7 |
|---|---|---|---|---|---|---|
| T(in) [mm] | 1.00 | 1.00 | 1.00 | 1.00 | 1.00 | 1.00 |
| Ts(in) [mm] | 1.10 | 1.10 | 1.10 | 1.10 | 1.10 | 1.10 |
| Ts(out) [mm] | 0.99 | 0.78 | 0.55 | 0.20 | 0.18 | 0.16 |
| Ts(out) / Ts(in) | 0.90 | 0.71 | 0.50 | 0.18 | 0.16 | 0.15 |
| Maximum temperature gradient at 50 mm from long segment outlet side end face [°C/cm] | 188 | 189 | 198 | 212 | 222 | 228 |
| Crack generation | None | None | None | None | Present (ring-off-crack) | Present (ring-off-crack) |
| Pressure loss decrease rate [%] (based on Example 13) | 1.1 | 2.1 | 3.4 | 5.2 | 5.6 | 6.0 |

(Examples 22 to 25, Comparative Examples 8 and 9)

Plugged honeycomb structures of Examples 22 to 25 and Comparative Examples 8 and 9 were manufactured in the same manner as in Example 18 except that the average thickness Ts(in) on the fluid inflow hole side end face and the average thickness Ts(out) on the fluid outflow hole side end face were changed as shown in Table 4. The obtained plugged honeycomb structures were used as DPFs, and a regeneration limit test and a pressure loss measurement test were performed in the same manner as in Example 18. The results are shown in Table 4. However, in the pressure loss measurement test, each pressure loss value was shown as the pressure loss decrease rate [%] on the basis of the pressure loss value of Example 17.

Table 4

|  | Example 22 | Example 23 | Example 24 | Example 25 | Comp. Ex. 8 | Comp. Ex. 9 |
|---|---|---|---|---|---|---|
| T(in) [mm] | 1.00 | 1.00 | 1.00 | 1.00 | 1.00 | 1.00 |
| Ts(in) [mm] | 5.00 | 5.00 | 5.00 | 5.00 | 5.00 | 5.00 |
| Ts(out) [mm] | 4.50 | 3.00 | 2.00 | 0.20 | 0.18 | 0.15 |
| Ts(out) / Ts(in) | 0.90 | 0.60 | 0.40 | 0.04 | 0.04 | 0.03 |
| Maximum temperature gradient at 50 mm from long segment outlet side end face [°C/cm] | 185 | 181 | 184 | 205 | 229 | 236 |
| Crack generation | None | None | None | None | Present (ring-off-crack) | Present (ring-off-crack) |
| Pressure loss decrease rate [%] (based on Example 17) | 1.2 | 3.2 | 5.1 | 7.8 | 8.1 | 8.2 |

From Tables 3 and 4, it was found out that pressure loss due to soot deposition can be reduced by making the average thickness Ts(out) of the bonding material layer on the fluid outflow hole side end face small in comparison with the average thickness Ts(in) of the bonding material layer on the inflow hole side end face, thereby sufficiently securing the filter area. However, it was found out that, when Ts(out) is too small, heat transfer from the long segment to the short segment increases upon regeneration of the filter where soot has deposited, and the difference between the outer peripheral portion temperature and the inner portion temperature of the long segment increases to easily cause a crack (ring-off-crack) beginning at the long segment. Therefore, it was confirmed that a crack resistance performance of the filter can be improved, and at the same time the pressure loss increase of the DPF can be suppressed at minimum by controlling the thickness of the bonding material layer for bonding the short segment with the long segment to be within the appropriate range. By suppressing pressure loss of the DPF, it is possible to reduce a fuel consumption amount of a vehicle.

A plugged honeycomb structure of the present invention can suitably be used as a DPF realizing space saving and having an erosion inhibition effect in an exhaust gas purifying apparatus. In addition, according to a method for manufacturing a plugged honeycomb structure of the present invention, a plugged honeycomb structure having a desired end portion shape can easily be manufactured. Thus, the present invention has great industrial applicability.

**Claims**

1.  A plugged honeycomb structure for a diesel particulate filter, the plugged honeycomb structure having a plurality of cells (5) functioning as fluid passages separated by porous partition walls (6) and having plugging portions (25) arranged in such a manner that each of adjacent cells (5) is plugged in one fluid passage end portion of the honeycomb structure at the mutually opposite end from that at which the other of the adjacent cells is plugged; wherein the plugged honeycomb structure has a cutout portion (2) in a part of one fluid passage end portion, and predetermined cells (5) constituting the cutout portion (2) are plugged in such a manner that each of adjacent cells of said predetermined cells is plugged in one said end portion at the mutually opposite end from that at which the other of the adjacent cells is plugged;
    wherein a plurality of honeycomb segments (1) are integrally bonded by means of a bonding material layer (3) ;
    the cutout portion (2) is formed in units of honeycomb segments by making the length in an axial direction of at least one of the honeycomb segment (1a) shorter than that of the other honeycomb segments (1b);
    and
    the cutout portion (2) is formed in a fluid inflow hole side end portion of the honeycomb structure, and the relation between (a) an average thickness Ts(in), on the fluid in flow hole side end face (11), of the bonding material layer (3) bonding the short segment (1a) and a long segment (1b) being one of the other honeycomb segments together, and (b) an average thickness T (in), on the fluid inflow hole side end face, of the bonding material layer (3) bonding the short segment with another short segment (1a) or bonding the long segment with another long segment (1b) is

$$Ts(in) > T(in).$$

2. A plugged honeycomb structure according to Claim 1, wherein the relation between the average thickness Ts(in) and the average thickness T(in) is

$$Ts(in) = (1.1 \text{ to } 5.0) \times T(in).$$

3. A plugged honeycomb structure according to Claim 1 or claim 2, wherein the relation between an average thickness Ts(out), on an fluid outflow hole side end face (12) of the honeycomb structure, of the bonding material layer (3) bonding the short segment (1a) and the long segment (1b) together and the average thickness Ts (in) is

$$Ts(out) < Ts(in),$$

and
the thickness of the bonding material layer (3) is gradually reduced from the average thickness Ts(in) toward the average thickness Ts(out).

4. A plugged honeycomb structure according to Claim 3, wherein the relation between the average thickness Ts(out) and the average thickness Ts(in) is

$$Ts(out) \leq 0.9 \times Ts(in) \text{ and } Ts(out) \geq 0.2 \text{ mm}.$$

5. A plugged honeycomb structure according to any one of Claims 1 to 4, wherein the short segment (1a) is an oblique segment obliquely bonded with the long segment with using a bonding material spacer (19).

6. A method for manufacturing a plugged honeycomb structure according to Claim 5, wherein the plugged honeycomb structure having the cutout portion is formed by obliquely bonding the short segment (3a) with the long segment (1b) using a plurality of bonding material spacers (19) having different thickness and the relation between the thickness S(in) of the bonding material spacer on the inflow hole side end face in the direction perpendicular to the axial direction of the plugged honeycomb structure and the thickness S(out) of the bonding material spacer on the outflow hole side end face in the direction perpendicular to the axial direction of the plugged honeycomb structure on bonding faces between the short segment and the adjacent long segment is

$$S(out) \leq 0.9 \times S(in), \text{ and } S(out) \geq 0.2 \text{ mm}.$$

7. A diesel particulate filter having a plugged honeycomb structure according to any one of claims 1 to 5.

8. An exhaust gas purification structure including a diesel particulate filter according to claim 7.

**Patentansprüche**

1. Verschlossene Wabenstruktur für einen Dieselteilchenfilter, wobei die verschlossene Wabenstruktur eine Vielzahl von Zellen (5) aufweist, die als Fluiddurchgänge fungieren, die durch poröse Trennwände (6) getrennt sind und verschlossene Abschnitte (25) aufweisen, die derart angeordnet sind, dass jede von benachbarten Zellen (5) in einem Fluiddurchgangsendabschnitt der Wabenstruktur verschlossen ist, und zwar am jeweils entgegengesetzten Ende von jenem, an dem die andere der benachbarten Zellen verschlossen ist; wobei die verschlossene Wabenstruktur einen ausgesparten Abschnitt (2) in einem Teil eines Fluiddurchgangsendabschnitts aufweist, und vorbestimmte Zellen (5) den ausgesparten Abschnitt (2) ausbilden, die derart verschlossen sind, dass jede von benachbarten Zellen der vorbestimmten Zellen in dem einen Endabschnitt verschlossen ist, und zwar am jeweils entgegengesetzten Ende von jenem, an dem die andere der benachbarten Zellen verschlossen ist;
wobei eine Vielzahl von Wabensegmenten (1) mittels einer Verbindungsmaterialschicht (3) einstückig verbunden sind;

wobei der ausgesparte Abschnitt (2) in Einheiten von Wabensegmenten gebildet ist, indem die Länge in Axialrichtung von zumindest einem aus dem Wabensegment (1a) kürzer als jene der anderen Wabensegmente (1b) gemacht wird; und

der ausgesparte Abschnitt (2) in einem Fluideinströmlochseiten-Endabschnitt der Wabenstruktur gebildet ist, und die Beziehung zwischen (a) einer mittleren Dicke Ts(ein) auf der Fluideinströmlochseiten-Endfläche (11) der Verbindungsmaterialschicht (3), die das kurze Segment (1a) und ein langes Segment (1b), das eines der anderen Wabensegmente ist, miteinander verbindet, und (b) einer mittleren Dicke T(ein) auf der Fluideinströmlochseiten-Endfläche der Verbindungsmaterialschicht (3), die das kurze Segment mit einem anderen kurzen Segment (1a) verbindet oder das lange Segment mit einem anderen langen Segment (1b) verbindet, die folgende ist:

$$Ts(ein) > T(ein).$$

2. Verschlossene Wabenstruktur nach Anspruch 1, wobei die Beziehung zwischen der mittleren Dicke Ts(ein) und der mittleren Dicke T(ein) die folgende ist:

$$Ts(ein) = (1,1 \text{ bis } 5,0) \times T(ein).$$

3. Verschlossene Wabenstruktur nach Anspruch 1 oder 2, wobei die Beziehung zwischen einer mittleren Dicke Ts(aus) auf einer Fluidausströmlochseiten-Endfläche (12) der Wabenstruktur der Verbindungsmaterialschicht (3), die das kurze Segment (1a) und das lange Segment (1b) miteinander verbindet und der mittleren Dicke Ts(ein)

$$Ts(aus) < Ts(ein) \text{ ist,}$$

und

die Dicke der Verbindungsmaterialschicht (3) sich von der mittleren Dicke Ts(ein) allmählich zur mittleren Dicke Ts(aus) verringert.

4. Verschlossene Wabenstruktur nach Anspruch 3, wobei die Beziehung zwischen der mittleren Dicke Ts(aus) und der mittleren Dicke Ts(ein) die folgende ist:

$$Ts(aus) \leq 0,9 \times Ts(ein) \text{ und } Ts(aus) \geq 0,2 \text{ mm}.$$

5. Verschlossene Wabenstruktur nach einem der Ansprüche 1 bis 4, wobei das kurze Segment (1a) ein schräges Segment ist, das schräg mit dem langen Segment verbunden ist, wobei ein Verbindungsmaterial-Distanzhalter (19) verwendet wird.

6. Verfahren zur Herstellung einer verschlossenen Wabenstruktur nach Anspruch 5, wobei die verschlossene Wabenstruktur mit dem ausgesparten Abschnitt gebildet wird, indem das kurze Segment (3a) mit dem langen Segment (1b) unter Verwendung einer Vielzahl von Verbindungsmaterial-Distanzhaltern (19) mit unterschiedlichen Dicken schräg verbunden wird, und die Beziehung zwischen der Dicke S(ein) des Verbindungsmaterial-Distanzhalters auf der Einströmlochseiten-Endfläche in der Richtung normal zur Axialrichtung der verschlossenen Wabenstruktur und der Dicke S(aus) des Verbindungsmaterial-Distanzhalters auf der Ausströmlochseiten-Endfläche in der Richtung normal zur Axialrichtung der verschlossenen Wabenstruktur auf Verbindungsflächen zwischen dem kurzen Segment und dem benachbarten langen Segment die folgende ist:
S(aus) ≤ 0,9 x S(ein) und S(aus) ≥ 0,2 mm.

7. Dieselteilchenfilter mit einer verschlossenen Wabenstruktur nach einem der Ansprüche 1 bis 5.

8. Abgasreinigungsstruktur umfassend einen Dieselteilchenfilter nach Anspruch 7.

**Revendications**

1. Structure en nid d'abeille enfichée pour un filtre à particules diesel, la structure en nid d'abeille enfichée ayant une pluralité de cellules (5) fonctionnant comme des passages de fluide séparés par des parois de séparation poreuses (6) et ayant des parties d'enfichage (25) disposées de telle manière que chacune de cellules adjacentes (5) est enfichée dans une première partie d'extrémité de passage de fluide de la structure en nid d'abeille au niveau de l'extrémité mutuellement opposée de celle à laquelle l'autre des cellules adjacentes est enfichée ; dans laquelle la structure en nid d'abeille enfichée a une partie découpée (2) dans une partie d'une première partie d'extrémité de passage de fluide, et des cellules prédéterminées (5) constituant la partie découpée (2) sont enfichées de telle sorte que chacune de cellules adjacentes desdites cellules prédéterminées est enfichée dans une première partie d'extrémité au niveau de l'extrémité mutuellement opposée de celle à laquelle l'autre des cellules adjacentes est enfichée ;

dans lequel une pluralité de segments en nid d'abeille (1) sont liés d'un seul tenant au moyen d'une couche de matériau de liaison (3) ;

la partie découpée (2) est formée en unités de segments en nid d'abeille en réalisant la longueur dans une direction axiale d'au moins l'un des segments en nid d'abeille (1a) plus courte que celle des autres segments en nid d'abeille (lb) ; et

la partie découpée (2) est formée dans une partie d'extrémité côté trou d'écoulement entrant de fluide de la structure en nid d'abeille, et la relation entre (a) une épaisseur moyenne Ts(in), sur la face d'extrémité côté trou d'écoulement entrant de fluide (11), de la couche de matériau de liaison (3) liant le segment court (1a) et un segment long (lb) étant l'un des autres segments en nid d'abeille ensemble, et (b) une épaisseur moyenne T (in), sur la face d'extrémité côté trou d'écoulement entrant de fluide, de la couche de matériau de liaison (3) liant le segment court avec un autre segment court (1a) ou liant le segment long avec un autre segment long (1b) est

$$Ts(in) > T(in).$$

2. Structure en nid d'abeille enfichée selon la revendication 1, dans laquelle la relation entre l'épaisseur moyenne Ts(in) et l'épaisseur moyenne T(in) est

$$Ts(in) = (1,1 \text{ à } 5,0) \times T(in).$$

3. Structure en nid d'abeille enfichée selon la revendication 1 ou la revendication 2, dans laquelle la relation entre une épaisseur moyenne Ts(out), sur une face d'extrémité côté trou d'écoulement sortant de fluide (12) de la structure en nid d'abeille, de la couche de matériau de liaison (3) liant le segment court (1a) et le segment long (1b) ensemble et l'épaisseur moyenne Ts(in) est

$$Ts(out) < Ts(in),$$

et

l'épaisseur de la couche de matériau de liaison (3) est réduite graduellement à partir de l'épaisseur moyenne Ts(in) vers l'épaisseur moyenne Ts(out).

4. Structure en nid d'abeille enfichée selon la revendication 3, dans laquelle la relation entre l'épaisseur moyenne Ts(out) et l'épaisseur moyenne T(in) est

$$Ts(out) \leq 0,9 \times Ts(in) \text{ et } Ts(out) \geq 0,2 \text{ mm.}$$

5. Structure en nid d'abeille enfichée selon l'une quelconque des revendications 1 à 4, dans laquelle le segment court (1a) est un segment oblique lié de manière oblique avec le segment long en utilisant une entretoise de matériau de liaison (19).

6. Procédé de fabrication d'une structure en nid d'abeille enfichée selon la revendication 5, dans lequel la structure en nid d'abeille enfichée ayant la partie découpée est formée en liant de manière oblique le segment court (3a) avec le segment long (1b) en utilisant une pluralité d'entretoises de matériau de liaison (19) ayant une épaisseur différente, et la relation entre l'épaisseur S(in) de l'entretoise de matériau de liaison sur la face d'extrémité côté trou d'entrée dans la direction perpendiculaire à la direction axiale de la structure en nid d'abeille enfichée et l'épaisseur S(out) de l'entretoise de matériau de liaison sur la face d'extrémité côté trou de sortie dans la direction perpendiculaire à la direction axiale de la structure en nid d'abeille enfichée sur des faces de liaison entre le segment court et le segment long adjacent est

$$S(out) \leq 0,9 \times S(in), \text{ et } S(out) \geq 0,2 \text{ mm}.$$

7. Filtre à particules diesel ayant une structure en nid d'abeille enfichée selon l'une quelconque des revendications 1 à 5.

8. Structure de purification de gaz d'échappement comprenant un filtre à particules diesel selon la revendication 7.

FIG.1                                    10(10a)

FIG.2

10(10b)

FIG.3

<u>20(20a)</u>

FIG.4

<u>20(20b)</u>

FIG.5A

<u>110</u>

11    15    12

9  2  8

FIG.5B

<u>120</u>

11    15    12

9  2  13  8

FIG.5C

<u>130</u>

15

2  8

FIG.6

FIG.7

FIG.8

FIG.9

FIG.10

FIG.11

FIG.12

FIG.13

FIG.14

FIG.15

FIG.16

30

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9206526 A
- JP S5993717 U
- DE 102006039571